# EUROPEAN PATENT APPLICATION

(11) **EP 2 497 597 A1**
(43) Date of publication of application: **12.09.2012**
(21) Application number: 10828325.0
(22) Date of filing: 04.11.2010
(51) Int. Cl.: B23K 9/29, B23K 9/067, B23K 10/00, H05H 1/34

(54) **NON-CONSUMABLE ELECTRODE TYPE ARC WELDING APPARATUS**

(30) Priority: 04.11.2009 JP 2009253125
(71) Applicant: Kabushiki Kaisha Yaskawa Denki, Kitakyushu-shi, Fukuoka 806-0004 (JP); Sansha Electric Manufacturing Co., Ltd., Osaka 533-0031 (JP); Tokin Corporation, Hamamatsu-shi, Shizuoka 432-8006 (JP)
(72) Inventor: NISHIKAWA Seigo, Fukuoka 806-0004 (JP); MORIMOTO Takeshi, Osaka-shi, Osaka 533-0031 (JP); KATSUMATA Naomichi, Shizuoka 432-8006 (JP)
(74) Representative: Grünecker, Kinkeldey, Stockmair & Schwanhäusser
(86) International application number: PCT/JP2010/069637
(87) International publication number: WO 2011/055765

(57) **Abstract**

There is provided a non-consumable electrode type arc welding apparatus which does not generate a high frequency noise at the time of arc start, can prevent a failure in the start, and can suppress a wear of a tip of an electrode. In a non-consumable electrode type arc welding apparatus including a torch 1 having an electrode portion and a nozzle 1b, a gas supply 8, 9 that supplies, to the torch 1, a shielding gas flowing through a gap formed between the electrode portion and the nozzle 1b, a first power source 7 that applies a voltage between the electrode portion and the nozzle 1b to generate a pilot arc 14, a second power source 6 that applies a voltage between the electrode and a work to generate a main arc, and a controller 5 that controls the first power source 7 and the second power source 6, the electrode portion has an electrode 1a and an electrode holding portion 13 holding a base portion of the electrode, the electrode holding portion 13 has a protrusion 13a protruding toward the nozzle 1b from the side facing the nozzle 1b, and the protrusion 13a and the nozzle 1b are caused contact and separate from each other.

## Description

### TECHNICAL FIELD

The present invention relates to a non-consumable electrode type arc welding apparatus for joining metals and, more particularly, to a non-consumable electrode type arc welding apparatus which carries out welding by generating a main arc after generating a pilot arc.

### BACKGROUND ART

### <Conventional Art Generating Pilot Arc>

In a TIG (tungsten inert gas) arc welding or a plasma arc welding using non-consumable tungsten as an electrode, generally, a high frequency voltage of several thousands volts is superposed and applied between a tip of an electrode of a welding torch and a welding base material (a work) to generate an arc. In generating the arc, conventionally, there has been used a method in which a pilot arc serving as a pilot light is generated prior to generating a main arc for welding. For example, Patent Document 1 discloses a transition to a main arc after achieving a favorable pilot arc by temporality increasing a quantity of a gas for pilot arc generation at the time of generating the pilot arc.
Patent Document 2 discloses a transition to an arc for working from a contact spark generated by separating a nozzle and an electrode, which have been contacting with each other, using a pressure of a gas for plasma.

### PRIOR ART DOCUMENT

### PATENT DOCUMENT

Patent Document 1: JP 63-194867 A
Patent Document 2: JP 3-106572 A

### SUMMARY OF INVENTION

### PROBLEMS TO BE SOLVED

### <Problem of Patent Document 1>

In the method of Patent Document 1, however, when generating a pilot arc, a high frequency power source is used in addition to a direct-current power source for the pilot arc. Therefore, there has been a problem that a high frequency noise generated from the high frequency power source may give adverse effect, such as malfunction, to peripheral electronic devices.
Further, the pilot arc generated between an electrode and a nozzle causes an oxide forming an insulating film on a surface of the electrode and on an internal surface of the nozzle. This oxide film is accumulated by repeating the arc start. Therefore, there has been a problem that the arc start fails due to the difficulty in generating the pilot arc, unless the oxide film is removed or the parts are replaced periodically.

### <Advantage of Patent Document 2>

In contrast, according to the method of Patent Document 2, there is no noise problem because a high-voltage high-frequency power source is not used at the time of generating the pilot arc.
Moreover, at the time of arc start, the electrode and the nozzle (or the electrode and an auxiliary electrode) repeat contacting and separating.
This contacting operation acts advantageously in removing the oxide film, so that the oxide film is less accumulated as compared with Patent Document 1.

### <Problem of Patent Document 2>

However, this operation is carried out by means of a spring compressed by a shielding gas. A force that presses the electrode against the nozzle (or a force that presses the auxiliary electrode against the electrode) by the spring is small. Therefore, the oxide film cannot be sufficiently removed by their contact, and there is still a problem of a gradual deterioration in arc start characteristics.
Moreover, there is also a problem in that damage or wear of the tip of the electrode is advanced due to the contact of the tip portion of the electrode with the nozzle.

### <Object of Invention>

The present invention has been made in view of the problems described above, and it is an object thereof to not generate a high frequency noise at the time of arc start in non-consumable electrode type arc welding, and to provide a non-consumable electrode type arc welding apparatus in which a failure in the arc start is prevented and a wear of a tip of an electrode is suppressed.

### MEANS FOR SOLVING THE PROBLEMS

To solve the problems described above, the present invention has the following configurations.
A first aspect of the invention relates to a non-consumable electrode type arc welding apparatus. The non-consumable electrode type arc welding apparatus includes a torch having an electrode portion and a nozzle provided around an outer periphery of the electrode portion such that a gap is formed between the electrode portion and the nozzle, a gas supply that supplies a shielding gas to the torch, the shielding gas flowing through the gap between the electrode portion and the nozzle, a first power source that applies a voltage between the electrode portion and the nozzle to generate a pilot arc, a second power source that applies a voltage between the electrode and a work to generate a main arc, and a controller that controls the first power source and the second power source. The electrode portion includes an electrode and an electrode holding portion holding a base portion of the electrode. The electrode holding portion has a protrusion protruding toward the nozzle from a side facing the nozzle. The torch includes a moving mechanism configured to move the electrode portion in a longitudinal direction inside the torch such that the protrusion and the nozzle contact and separate from each other.
According to a second aspect of the invention, in combination with the first aspect of the invention, when the moving mechanism causes the protrusion and the nozzle to contact each other, the shielding gas flows through the gap maintained by the protrusion between the electrode holding portion and the nozzle.
According to a third aspect of the invention, in combination with the first aspect of the invention, the pilot arc is generated between the protrusion and the nozzle by the first power source by separating the protrusion and the nozzle after causing the protrusion and the nozzle to contact each other.
According to a fourth aspect of the invention, in combination with the third aspect of the invention, the shielding gas moves the pilot arc to a tip portion of the electrode, and the second power source causes the pilot arc to make a transition to the main arc between the electrode and the work.
According to a fifth aspect of the invention, in combination with the first aspect of the invention, the moving mechanism is an air cylinder.
According to a sixth aspect of the invention, in combination with the first aspect of the invention, the electrode holding portion and the nozzle are made by a copper alloy.
According to a seventh aspect of the invention, in combination with the first aspect of the invention, there are further provided an articulated robot having a distal end to which the torch is attached, and a robot controller that controls the robot. The robot controller serves as the controller and controls the first power source and the second power source.
According to an eighth aspect of the invention, in combination with the first aspect of the invention, a tip portion of the electrode is exposed from a tip portion of the nozzle to carry out a TIG arc welding.
According to a ninth aspect of the invention, in combination with the first aspect of the invention, the nozzle covers the entire electrode to carry out a plasma arc welding.

### ADVANTAGE OF THE INVENTION

According to the present invention, a pilot arc generating point of a touch start type is provided inside the torch. The pilot arc is first generated inside the torch by the pilot power source, and immediately thereafter, the pilot arc is moved to the tip portion of the non-consumable electrode by the gas. The pilot arc moved to the tip portion of the electrode is maintained by the pilot power source.
When starting the arc welding, by using the pilot arc moved to the tip portion of the electrode as a pilot light, an arc is generated between the tip of the electrode and the work by the main power source.
According to the non-consumable electrode type arc welding apparatus of the present invention, a high frequency power source is not used to generate the pilot arc so that a high frequency noise is not generated. Further, the protrusion of the electrode holding portion, which is the pilot arc generating point inside the torch, and a portion of the nozzle are caused to contact with each other by a strong force, thereby removing an oxide film formed as a result of the generation of the pilot arc. Therefore, it is possible to prevent a starting error of the next pilot arc, thereby achieving a favorable arc start.
Moreover, the tip of the electrode and the nozzle do not contact with each other also when generating the pilot arc. Therefore, it is possible to suppress a wear of the tip portion of the electrode, thereby preventing the oxide film from being deposited on the tip of the electrode. In this respect, also, it is possible to contribute to a favorable arc start.

### BRIEF DESCRIPTION OF THE DRAWINGS

Fig. 1 is a diagram illustrating an overall structure of a non-consumable electrode type arc welding apparatus;
Fig. 2 is a side view of a torch;
Fig. 3 is a top view of the torch;
Fig. 4 is a view illustrating a side section of a tip portion of a TIG welding torch;
Fig. 5 is a perspective view of an electrode portion;
Fig. 6 is a front view of the electrode portion;
Fig. 7 is a timing chart illustrating up-down movements of the electrode portion and changes in flow rates of a center gas and a shielding gas and in a current by a pilot power source and a current by a main power source;
Fig. 8 is a view illustrating a side section of the tip portion of the TIG welding torch at t1 in Fig. 7;
Fig. 9 is a view illustrating the side section of the tip portion of the TIG welding torch at t2 in Fig. 7;
Fig. 10 is a view illustrating the side section in a state in which a pilot arc is moved to a tip portion of a nozzle;
Fig. 11 is a view illustrating the side section of the tip portion of the TIG welding torch at t3 in Fig. 7;
Fig. 12 is a view illustrating the side section of the tip portion of the TIG welding torch at t5 in Fig. 7;
Fig. 13 is a view illustrating a side section of a tip portion of a plasma welding torch;
Fig. 14 is a view illustrating the side section of the tip portion of a plasma welding torch at t1 in Fig. 7;
Fig. 15 is a view illustrating the side section of the tip portion of a plasma welding torch at t2 in Fig. 7;
Fig. 16 is a view illustrating the side section in a state in which a pilot arc is moved to a tip portion of a nozzle;
Fig. 17 is a view illustrating the side section of the tip portion of a plasma welding torch at t3 in Fig. 7, and
Fig. 18 is a view illustrating the side section of the tip portion of a plasma welding torch at t5 in Fig. 7.

### EMBODIMENTS OF INVENTION

Hereinafter, embodiments of the present invention will be described with reference to the drawings.

### EMBODIMENT 1

### <Overall Structure of Non-Consumable Electrode Type Arc Welding Apparatus>

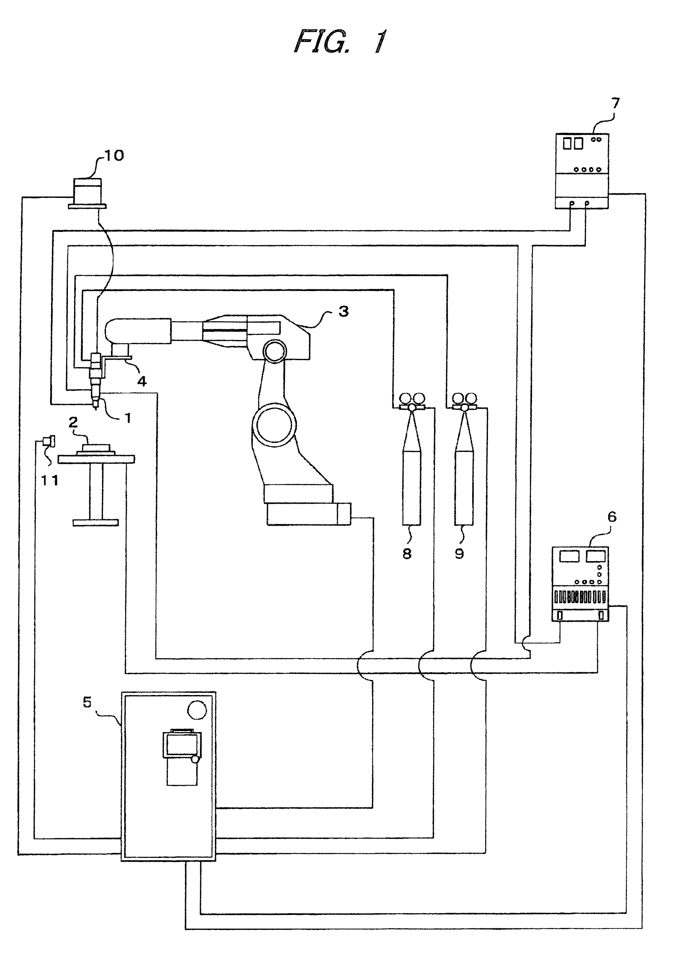

Fig. 1 is a diagram illustrating an overall structure of a non-consumable electrode type arc welding apparatus.
In this embodiment, description will be given by taking a TIG welding apparatus as an example.
1 denotes a torch, and 2 denotes a work to be a welded. The torch 1 is attached to a distal portion of a robot 3 via an attachment jig 4. The robot 3 is an articulated robot including a plurality of joints, and can freely change a position and an orientation of the torch 1 with respect to the work 2 by suitably controlling an operation of each of the joints. The robot 3 is controlled by a controller 5.
6 denotes a main power source that supplies welding power between the torch 1 and the work 2, and 7 denotes a pilot power source that supplies power between an electrode in the torch 1 and a nozzle at a tip portion of the torch 1 to generate a pilot arc. 8 and 9 each denotes a gas cylinder that supplies inert gas such as argon as a shielding gas into the torch 1. In this embodiment, two gas cylinders are provided, as the shielding gas is duplexed, details of which will be described later.

### <Up-Down Movement of Torch 1>

10 denotes an air compressor that supplies air for vertically moving the electrode in the torch 1. An internal structure of the torch 1 will be described later.
11 denotes an optical sensor for detecting a presence of an arc generation by a light emission from an arc. Further, while it is omitted in Fig. 1, a cooling water circulating device is provided to circulate cooling water in the torch 1 to cool the electrode.
In Fig. 1, the torch 1 is moved by being attached to the distal end of the articulated robot. However, this is only an example of a welding apparatus according to the present invention, and the torch 1 may be moved by means other than the articulated robot.

### <Function of Controller 5>

The controller 5 has a function of controlling, in addition to the robot 3, the entire welding apparatus, such as ON/OFF of a power supply to the torch 1 by the main power source 6 and the pilot power source 7 and a flow rate control of a gas supplied from the gas cylinders 8, 9 to the torch 1.

### <Explanation of Side of Torch 1>

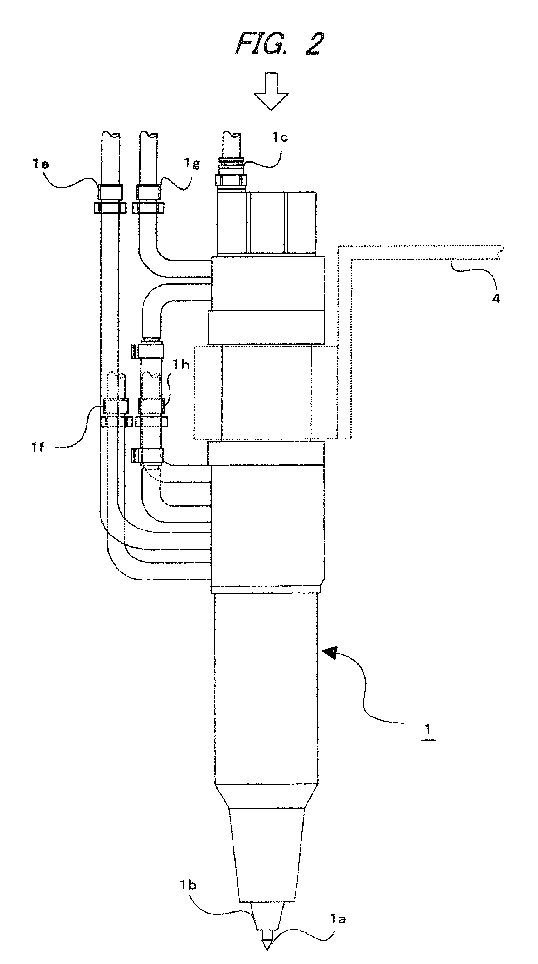

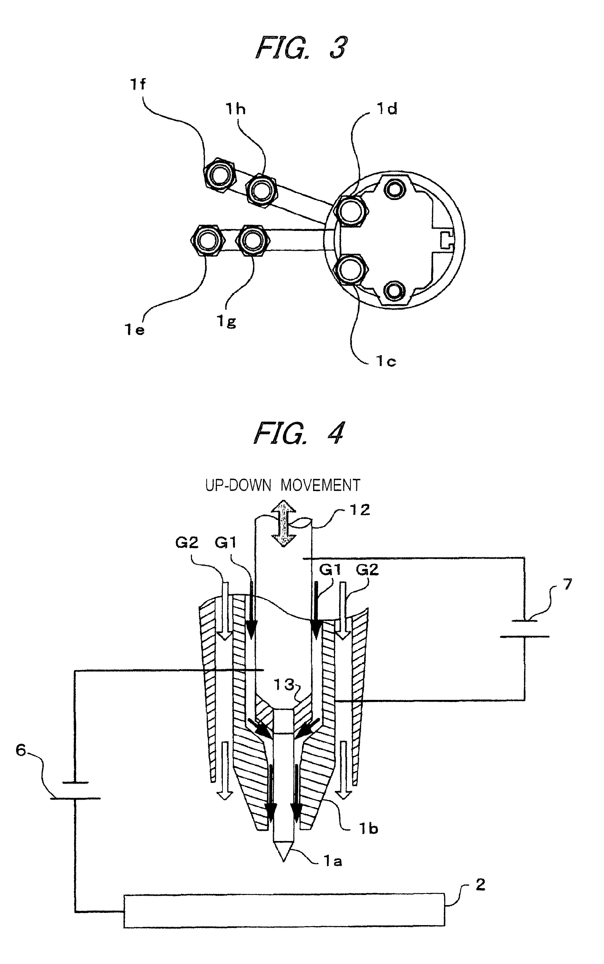

Fig. 2 is a side view of the torch 1, and Fig. 3 is a top view of the torch 1 seen in a direction of the white blank arrow in Fig. 2. In Figs. 2 and 3, the same portions have the same reference numerals.
1a denotes a tungsten electrode, and 1b denotes a nozzle. The nozzle 1b is made of a copper alloy. 1 c and 1 d each denotes an air supply port connected to the air compressor 10 and supplies compressed air from the air compressor 10 into the torch 1. This compressed air is used for an up-down movement of the electrode in the torch 1.
1f and 1 h each denotes a supply port for a shielding gas to be supplied from the respective gas cylinders 8, 9, and supplies the shielding gas into the torch 1. The shielding gas flows inside the torch 1, and is discharged from the tip portion of the torch 1.
1e and 1g denote discharge and supply ports respectively for the cooling water to be circulated in the torch 1.

### <Explanation of Tip Portion of Torch 1>

Fig is a view illustrating a side section of the tip portion of the torch 1. The tungsten electrode 1a is held by an electrode holding portion 13 at a distal end of an electrode support member 12. Like the nozzle 1b, the electrode holding portion 13 is made of a copper alloy.
In a shown in Fig. 4, a space is provided between the tungsten electrode 1a and electrode holding portion 13 and the nozzle 1b, and a shielding gas (the black arrows indicated as G1) supplied from one of the two gas cylinders flows through this space in a downward direction from above in the drawing. Hereinafter, this shielding gas will be referred to as a center gas.
The pilot power source 7 applies voltage between the electrode holding portion 13 holding the tungsten electrode 1a and the nozzle 1b provided to surround the electrode holding portion 13.

### <Center Gas G1 and Shielding Gas G2>

A space is further provided between an outer periphery of the nozzle 1b and an outer wall of the torch, and a shielding gas (the white blank arrows indicated as G2) supplied from the other gas cylinder, which is different from the gas cylinder that supplies the center gas G1, flows in a downward direction from above the drawing. Hereinafter, this gas will be referred to simply as a shielding gas.
The main power source 6 supplies welding power between the electrode holding portion 13 and the work 2.

### <Up-Down Movement of Electrode Portion>

As described above, the tungsten electrode 1a, the electrode support member 12 and the electrode holding portion 13 are configured such that they can move together in up and down directions inside the torch by the compressed air from the air compressor 10. In this embodiment, while illustration in the drawings is omitted, a general air cylinder is used as an up-down moving mechanism. Hereinafter, the tungsten electrode 1a, the electrode support member 12 and the electrode holding portion 13 will be collectively referred to as an electrode portion.
When the air is supplied to the air supply port 1c, the electrode portion is pushed out, and is moved down until the electrode holding portion 13 hits an inner wall of the nozzle 1b. When the air is supplied to the air supply port 1d, the electrode portion is upwardly pulled in, and is returned to an original position. Fig. 4 shows a state in which the electrode portion is upwardly pulled in.

### <Structure of Electrode Portion>

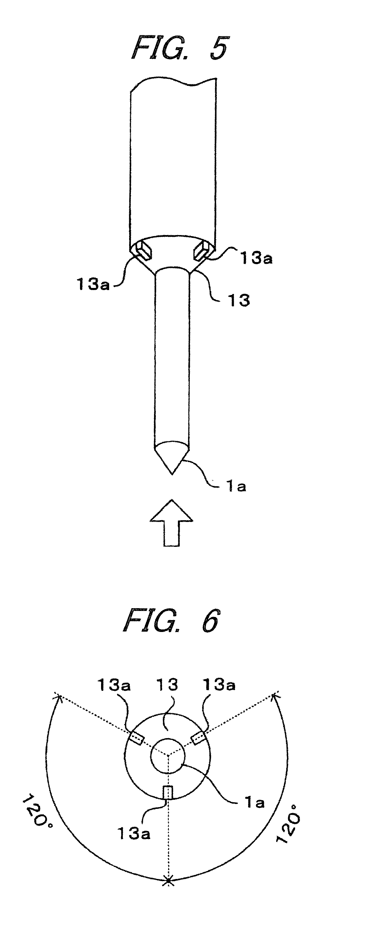

Figs. 5 and 6 are views of the electrode portion.
Fig. 5 is a perspective view of the electrode portion seen from obliquely below, and Fig. 6 is a front view of the electrode portion seen in a direction of the white blank arrow in Fig. 5. The electrode holding portion 13 is provided with a plurality of protrusions 13a. When the electrode portion is moved downward, the electrode portion stops when the protrusion 13a contacts the nozzle 1b. In this embodiment, each of the protrusions has a height (a downward projection in Fig. 5) of about 0.5 mm and a length (in a radially extending direction from a central axis of the electrode portion in Fig. 6) of about 1 mm. In Figs. 5 and 6, the protrusions 13a are provided at three locations at an interval of 120° in the front view. However, the number and arrangement of the protrusions 13a are not limited to this.
Nevertheless, if a contact area between the protrusion 13a and the nozzle 1b is excessively large, amount of deposition of an oxide film due to the generation of the pilot arc, which will be described later, will increase. Therefore, it is desirable to minimize the contact area.

### <Steps from Arc Start to Welding>

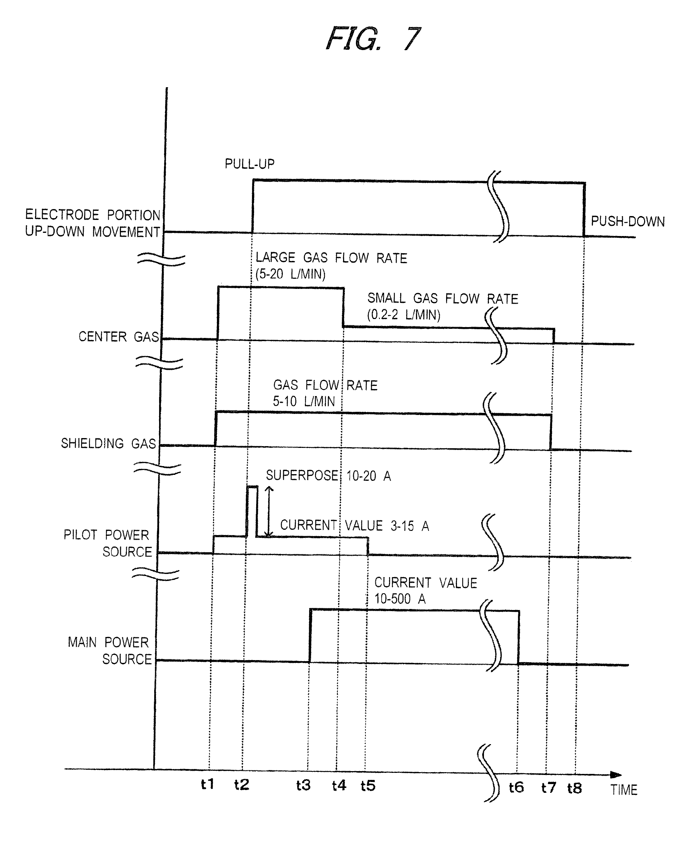

Next, steps from an arc start to welding in the non-consumable electrode type arc welding apparatus according to this embodiment will be described with reference to Figs. 7 to 12.

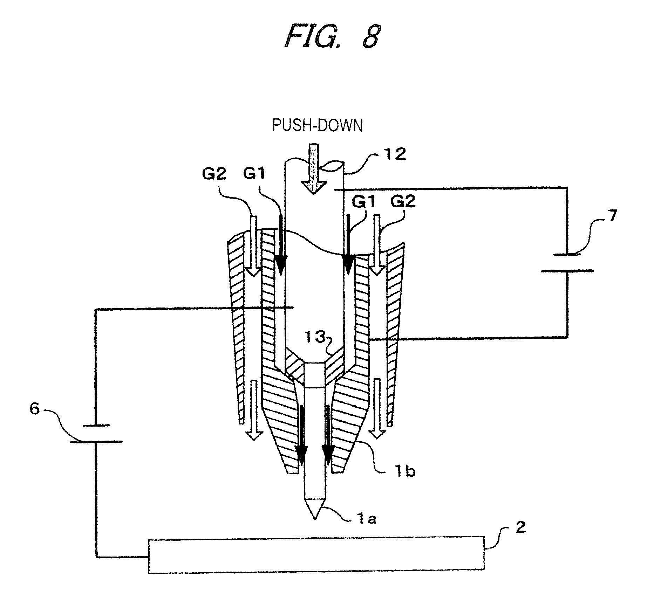

Fig. 7 is a timing chart illustrating up-down movements of the electrode portion, changes in flow rates of the center gas and the shielding gas and in a current by the pilot power source and a current by the main power source, from the arc start to an end of the welding, and Figs. 8 to 12 are side sectional views illustrating conditions of the tip portion of the torch at the respective timings.

### <<Step 1: Approach of Torch 1 to Work 2>>

First, the robot 3 is operated in accordance with a command from the controller 5 to cause the torch 1 to approach the work 2 and to move the torch 1 to a suitable position as shown in Fig. 8. At this point, the electrode portion is downwardly pushed-out by means of the up-down moving mechanism.
When the torch is moved to the suitable position, the controller 5 outputs a command to supply the center gas and the shielding gas into the torch 1. The flow rates of the gases depend on shapes of the respective gas passages in the torch. Here, the flow rate of the center gas G1 is about 5 to 20 L/minute, and the flow rate of the shielding gas G2 is about 5 to 10 L/minute. Further, a voltage is applied, by the pilot power source 7, between the electrode holding portion 13 and the nozzle 1b that are contacting with each other to conduct a current between the electrode holding portion 13 and the nozzle 1b. A current value by the pilot power source 7 is, while it depends on the shape of the nozzle, etc., about 3 to 15 A. In Fig. 7, t1 corresponds to this condition.
In Fig. 8, it appears that the passage for the center gas G1 is blocked by the contact between the protrusions 13a of the electrode holding portion 13 and the nozzle 1b. However, the protrusions 13a are configured in a manner shown in Figs. 5 and 6. Therefore, even when the protrusions 13a are contacting the nozzle 1b, there is a gap between the electrode holding portion 13 and the nozzle 1b. The center gas G1 flows out from a periphery of the tungsten electrode 1a through this gap.

### <<Step 2: Generation of Pilot Arc due to Pull-up of Electrode Portion>>

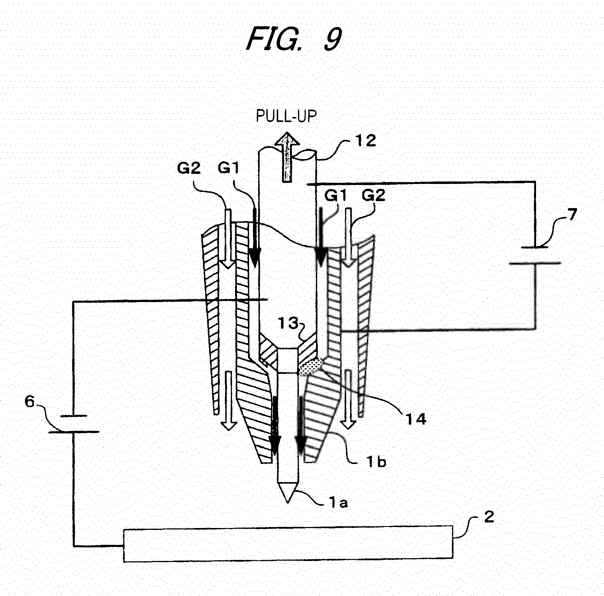

The controller 5 subsequently outputs a command to the air compressor 10, and pulls in the electrode portion upwardly as shown in Fig. 9 by means of the up-down moving mechanism. In Fig. 7, t2 corresponds to this condition. Here, the moving amount of the electrode portion is, while it depends on the internal structure of the torch, about 0.3 to 2.0 mm.
When the electrode portion is moved upward from the condition in which the current flows between the electrode holding portion 13 and the nozzle 1b by means of the pilot power source 7, the protrusions 13a and the nozzle 1b, which have been contacting each other, separate from each other. When the protrusions 13a move upward so that a short circuit with the nozzle 1b is released, an arc 14 as shown in Fig. 9 is generated from at least one of the protrusions 13a. Hereinafter, this arc 14 will be referred to as a pilot arc. In the drawing, the presence of the pilot arc is schematically illustrated for easy understanding.
As described above in connection with the shape of the protrusions 13a, the contact area with the nozzle 1b is minimized. Consequently, the pilot arc is easily generated. Further, the pilot power source 7 superposes a current of 10 to 20A on a normal current value for 5 to 10 msec after detecting that the short circuit between the protrusion 13a and the nozzle 1b is released. Consequently, the pilot arc is reliably generated.

### <<Method of Confirming Generation of Pilot Arc>>

The pilot power source 7 has a feedback function of a current and a voltage, and it is easy to confirm the generation of the pilot arc of Fig. 9 by means of the controller 5. It is possible to detect the generation of the pilot arc depending on whether the current value and the voltage value detected by the pilot power source 7 fulfill given conditions (e.g., a voltage of 15 V or more with a current flow of 3A or more).

### <<Advantage of Pilot Arc>>

According to this embodiment, only the pilot power source 7, which is a direct-current power source, is used to generate the pilot arc, and a high frequency power source is not used. Therefore, it is possible to prevent peripheral devices from causing malfunction due to a high frequency noise emission.
Moreover, the pilot arc is generated by the separation of the protrusions 13a of the electrode holding portion 13 from the nozzle 1b, and the tip portion of the tungsten electrode 1a and the nozzle 1b do not contact with each other to generate the pilot arc. Consequently, it is possible to suppress wear of the tip of the electrode.
Further, the pilot arc is not generated between the tip portion of the tungsten electrode 1a and the nozzle 1b. Therefore, the generation of the pilot arc does not form an oxide film on the tip portion of the tungsten electrode 1a. Thus, it is possible to suppress oxide-film-associated deterioration of main arc starting characteristics between the tungsten electrode 1a and the work 2.

### <<Step 3: Movement of Pilot Arc>>

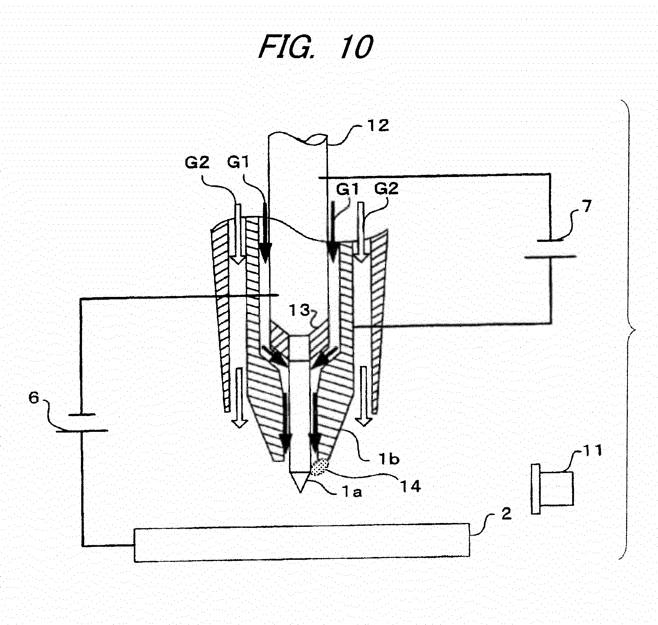

When the electrode portion is moved upward, the pilot arc 14 is pushed by the center gas G1, and moves to the tip portion of the tungsten electrode 1a as shown in Fig. 10.
When the pilot arc 14 reaches the tip portion of the tungsten electrode 1a, it has no further way to move, so it stays in this position. In this state, to prevent the arc from being extinguished by the center gas G1, the pilot power source 7 applies a sufficient voltage (more specifically, about 30 V or more) between the electrode portion and the nozzle 1b so that the pilot arc 14 can be maintained.
By arranging the optical sensor 11 connected to the controller 5 toward the tip portion of the tungsten electrode 1a, it is possible to determine whether the pilot arc 14 generated in the torch as shown in Fig. 9 has reached the tip portion of the tungsten electrode 1a as shown in Fig. 10. The arc light is very strong, and has high light intensity even with a weak current of about 3 to 15 A. Therefore, it is possible to easily detect the movement of the pilot arc 14 by means of the optical sensor 11.

### <<Step 4: Generation of Main Arc>>

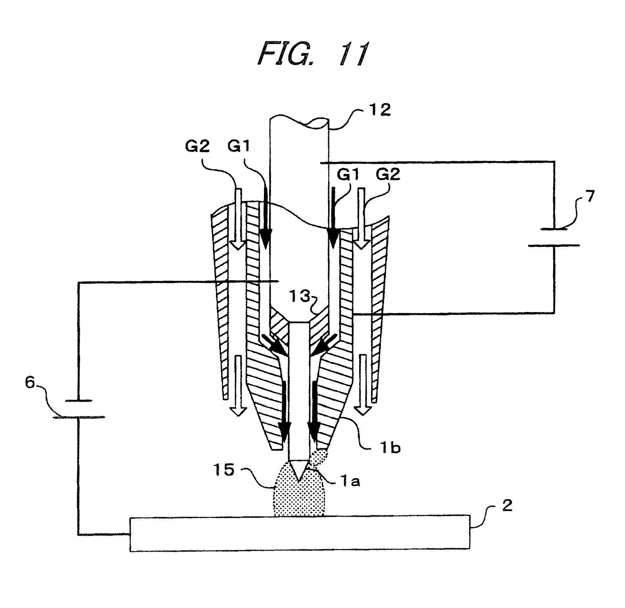

When the pilot arc 14 is positioned at the tip portion of the tungsten electrode 1a as shown in Fig. 10, a gas in the vicinity of the tip of the tungsten electrode 1a is ionized by the pilot arc 14. Further, a voltage is applied between the tungsten electrode 1a and the work 2 by means of the main power source 6. Therefore, a main arc 15 is easily generated between the tungsten electrode 1a and the work 2 as shown in Fig. 11 so that a current flows. In Fig. 7, t3 corresponds to this condition.
Accordingly, by maintaining the pilot arc 14 generated by the pilot power source 7 at the tip portion of the tungsten electrode 1a prior to welding, it is possible to smoothly generate the main arc 15 by the main power source 6 in a very short time.
While the actual value of welding current varies depending on a welding condition, the main power source 6 can cause a current of about 10 to 500A to flow.

### <<Step 5: Suppression of Flow Rate of Center Gas G1 after Generation of Main Arc>>

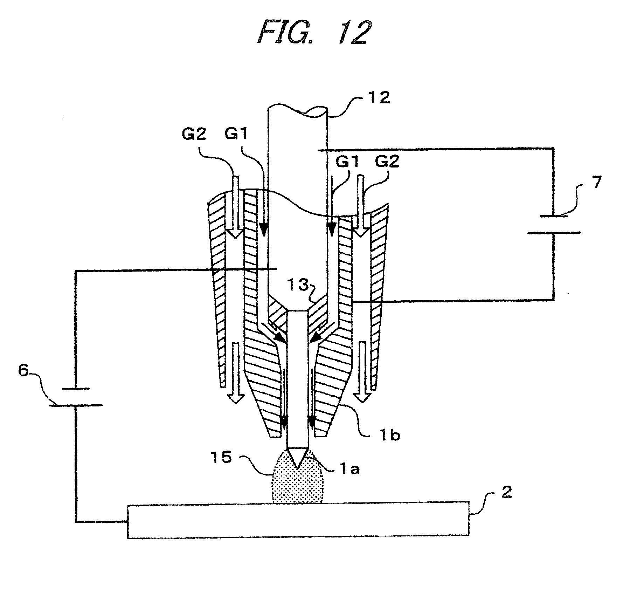

Until the main arc 15 is generated, the flow rate of the center gas G1 is set high to move the pilot arc 14 to the tip of the tungsten electrode 1a. After the pilot arc 14 is moved to the tip of the tungsten electrode 1a and the main arc 15 is generated, however, the flow rate of the center gas G1 is controlled to have a suitable value for welding, which is about 0.2 to 2 L/minute (t4 in Fig. 7). In Fig. 12, the black arrows indicating the center gas G1 are narrowed to show this change in the flow rate.
The pilot power source 7 is then disconnected (t5 in Fig. 7).

### <<Step 6: Welding by Main Arc>>

Subsequently, welding to the work 2 is carried out by the main arc 15. This state is shown in Fig. 12.

### <<Step 7: After Welding>>

After finishing the welding, first, the main power source 6 is disconnected (t6 in Fig. 7) and then the center gas G1 and the shielding gas G2 are turned off (t7 in Fig. 7). Thereafter, the electrode portion is pushed down by the up-down moving mechanism to prepare for next welding (t8 in Fig. 7).

### <<Removal of Oxide Film>>

When pushing down the electrode portion by the up-down moving mechanism, the protrusions 13a of the electrode holding portion 13 is pressed against the nozzle 1b by a large force to remove an oxide film generated on their surfaces by the pilot arc 14. More specifically, the pressing force is about 75 N. By removing the oxide film through this pressing operation, it is possible to smoothly generate the next pilot arc.
The protrusions 13a are provided to have a minimum contact area with the nozzle 1b, so that an amount of deposition of the oxide film is suppressed. Therefore, the oxide film can be sufficiently removed by a single pressing operation.

### <Timings 1 and 2 for Generating Pilot Arc>

In this embodiment, the torch 1 is caused to approach the work 2 in the state in which the welding power is supplied between the electrode holding portion 13 and the work 2 by the main power source 6, and the pilot arc is generated after the completion of the approach. However, the pilot arc may be generated and maintained at the tip portion of the tungsten electrode 1 a during the approach of the torch 1 to the work 2, and the main arc may be generated between the tungsten electrode 1 a and the work 2 by the main power source after the approach to the work 2 is completed.
According to this procedure, a preparation for the generation of the main arc is completed during the movement of the torch. Therefore, it is possible to shorten a time required for the entire welding work and a time during which the main power source is activated. Thus, it is possible to enhance working efficiency.
In this embodiment, pure argon gas is used as the center gas G1 and the shielding gas G2. However, depending on required welding quality, helium, hydrogen or oxygen is sometimes mixed to the argon gas.

### EMBODIMENT 2

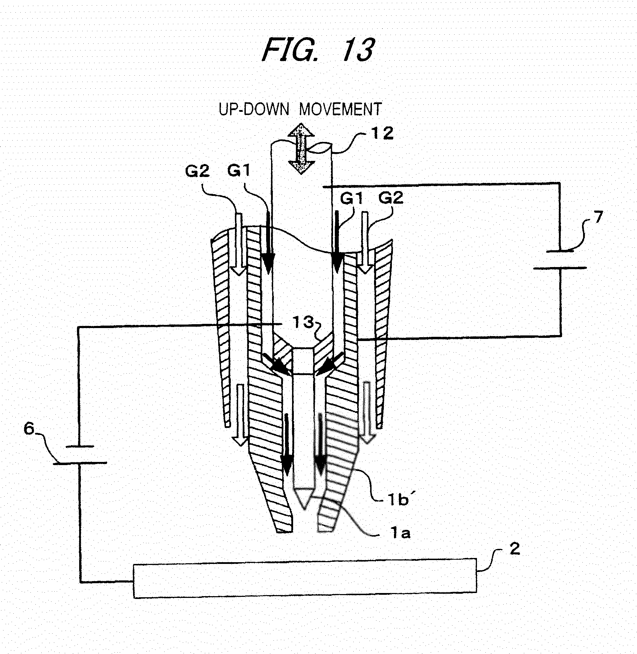

While the description has been made by taking the TIG welding apparatus as an example in the embodiment 1, in this embodiment, steps from an arc start to welding in a plasma welding apparatus will be described with reference to Figs. 13 to 18.

### <Explanation for Side Section of Tip Portion of Torch in Plasma Welding>

Fig. 13 is a view illustrating a side section of a tip portion of a torch in plasma welding.

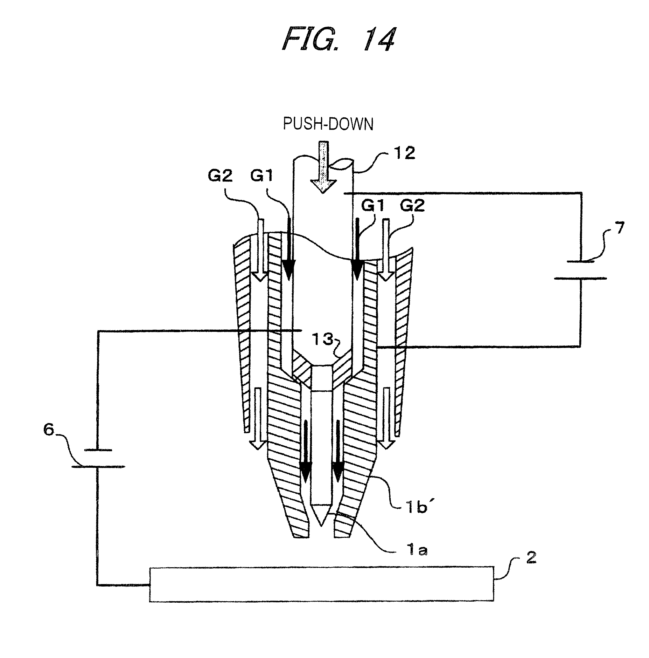

In Fig. 13, the portions that are the same as those in Fig. 4 have the same reference numerals. This is also the same for Figs. 14 to 18.
In the case of plasma welding, to narrow the arc, a nozzle 1b' is configured to surround a tip of a tungsten electrode 1a such that the tungsten electrode 1a is not exposed from the tip of the torch. The main arc generated from the tungsten electrode 1 a is narrowed by being cooled and constricted as it passes through a bore at the tip of the nozzle 1b'.
In the case of the plasma welding, thus, the shape of the nozzle and the positional relationship between the tip of the tungsten electrode 1a and the nozzle are different from those in the case of the TIG welding. However, the electrode portion is the same as in the case of the TIG welding, and a series of steps is similar to the TIG welding, i.e., generating a pilot arc between the protrusions 13a and the nozzle 1b' by the pilot power source 7, then moving the pilot arc to the tip portion of the tungsten electrode 1a, and making a transition to the main arc by the main power source 6.

Fig. 14 corresponds to Fig. 8 in the case of the TIG welding, and illustrates a state in which the torch 1 is caused to approach a work 2, and is moved to a suitable position. In Fig. 14, it appears that a passage for the center gas G1 is blocked by a contact between the protrusions 13a of the electrode holding portion 13 and the nozzle 1b'. However, like in the case of the TIG welding, the protrusions 13a are configured as shown in Figs. 5 and 6. Therefore, even when the protrusions 13a are contacting the nozzle 1b', there is a gap between the electrode holding portion 13 and the nozzle 1b'. The center gas G1 flows out of a periphery of the tungsten electrode 1a through this gap. Further, a voltage is applied between the electrode holding portion 13 and the nozzle 1b' by the pilot power source 7. This is similar to the condition at t1 of Fig. 7.

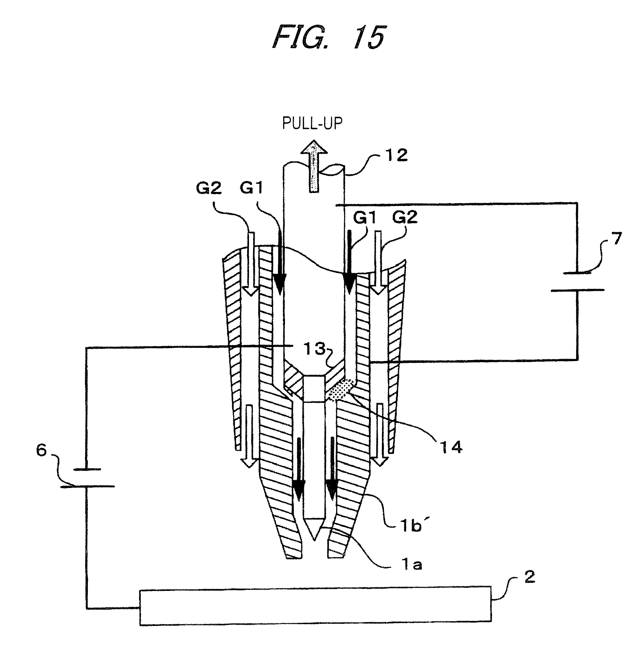

Fig. 15 corresponds to Fig. 9 in the case of the TIG welding.
It illustrates a state in which the electrode portion is upwardly pulled in by means of the up-down moving mechanism, and the pilot arc 14 is generated from at least one of the protrusions 13a in a similar manner as in the case of the TIG welding. This is similar to the condition at t2 of Fig. 7. In the drawing, the presence of the pilot arc is schematically illustrated for easy understanding.
As described above in connection with the shape of the protrusions 13a, the contact area with the nozzle 1b' is minimized. Consequently, the pilot arc is easily generated. Further, the pilot power source 7 superposes a current of 10 to 20A on a normal current value for 5 to 10 msec after detecting that a short circuit between the protrusion 13a and the nozzle 1b' is released. Consequently, the pilot arc is reliably generated.

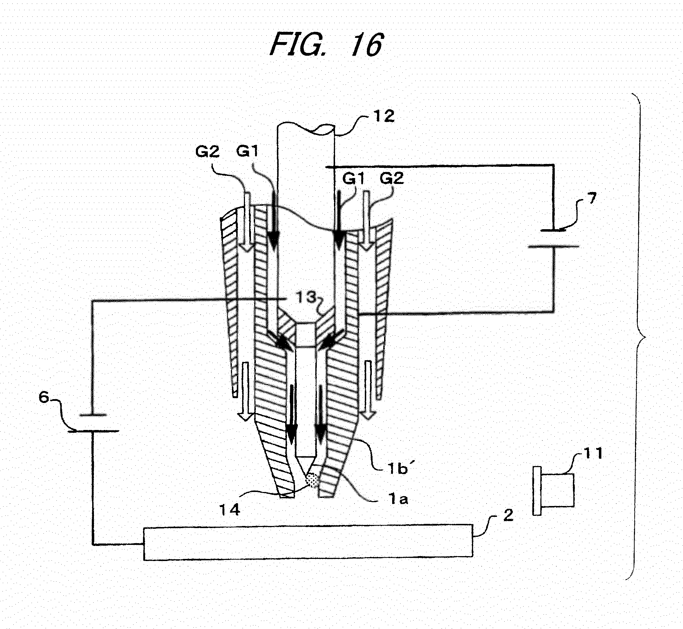

Fig. 16 corresponds to Fig. 10 in the case of the TIG welding, and illustrates a state in which the pilot arc 14 is moved to the tip portion of the tungsten electrode 1a by the center gas G1.
Here, by arranging the optical sensor 11 connected to the controller 5 toward the tip portion of the tungsten electrode 1a in a similar manner as in the case of the TIG welding, it is possible to determine whether the pilot arc 14 generated in the torch in Fig. 15 has reached the tip portion of the tungsten electrode 1a as shown in Fig. 16. In the case of the plasma welding, the pilot arc 14 is not exposed outside the nozzle 1b'. However, because the arc light is very strong, it is possible to detect the movement of the pilot arc 14 by means of the optical sensor 11.

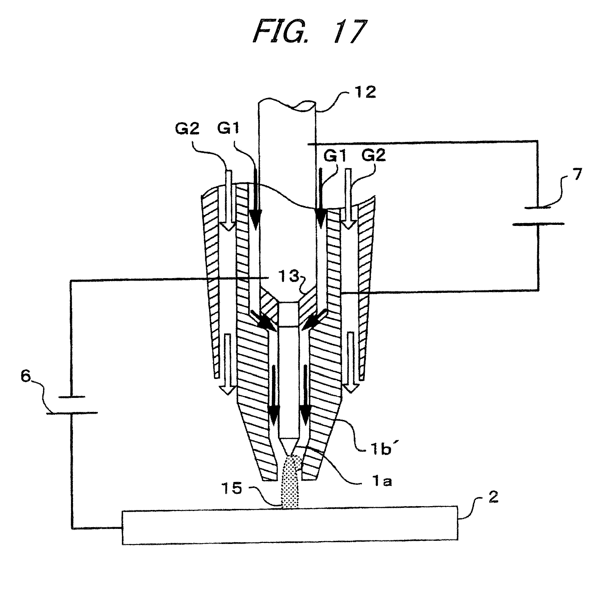

Fig. 17 corresponds to Fig. 11 in the case of the TIG welding, and illustrates a state in which the main arc 15 is generated. This is similar to the condition at t3 in Fig. 7.
Also in the case of the plasma welding, it is similar to the case of the TIG welding in that it is possible to smoothly generate the main arc 15 by the main power source 6 in a very short time by maintaining the pilot arc 14 generated by the pilot powder source 7 at the tip portion of the tungsten electrode 1a prior to the welding.
Also in the embodiment, like in the case of the TIG welding, only the pilot power source 7, which is a direct-current power source, is used to generate the pilot arc, and a high frequency power source is not used. Therefore, it is possible to prevent peripheral devices from causing malfunction due to a high frequency noise emission. Moreover, the pilot arc is generated by a separation of the electrode holding portion 13 from the nozzle 1b. Therefore, the tip portion of the tungsten electrode 1a and the nozzle 1b' do not contact each other to generate the pilot arc. Consequently, it is possible to suppress a wear of the tip of the electrode.
Further, it is similar to the case of the TIG welding in that, since the pilot arc is not generated between the tip portion of the tungsten electrode 1a and the nozzle 1b', the generation of the pilot arc does not form an oxide film on the tip portion of the tungsten electrode 1a, and it is possible to suppress the oxide-film-associated deterioration of main arc starting characteristics between the tungsten electrode 1 a and the work 2.

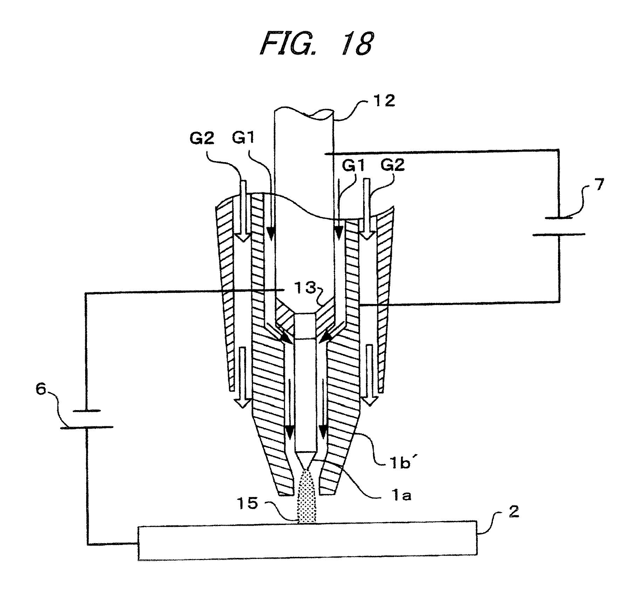

Until the main arc 15 is generated, the flow rate of the center gas G1 is set high to move the pilot arc 14 to the tip of the tungsten electrode 1a. After the pilot arc 14 is moved to the tip of the tungsten electrode 1 a and the main arc 15 is generated, however, the flow rate of the center gas G1 is controlled to have a suitable value for welding, which is about 0.2 to 2 L/minute (t4 in Fig. 7). In Fig. 18, the black arrows indicating the center gas G1 are narrowed to shown this change in the flow rate.
The pilot power source 7 is then disconnected (t5 in Fig. 7).
Subsequently, welding to the work 2 is carried out by the main arc 15. This state is shown in Fig. 18.

After finishing the welding, in a similar manner as in the case of the TIG welding, first, the main power source 6 is disconnected (t6 in Fig. 7), and then the center gas G1 and the shielding gas G2 are turned off (t7 in Fig. 7). Thereafter, the electrode portion is pushed down by the up-down moving mechanism to prepare for the next welding (t8 in Fig. 7).
When pushing down the electrode portion by the up-down moving mechanism, the electrode holding portion 13 is pressed against the nozzle 1b' by a large force to remove an oxide film generated on their surfaces by the pilot arc 14. More specifically, the pushing force is about 75 N. By removing the insulating film through this pressing operation, it is possible to smoothly generate the next pilot arc.
The protrusion 13a is provided such that the contact area with the nozzle 1b' is minimized, so that the amount of deposition of the oxide film is suppressed. Therefore, the oxide film can be sufficiently removed by a single pressing operation.

The present application is based on Japanese Patent Application No. 2009-253125 filed on November 4, 2009, the content of which is incorporated herein by reference.

### EXPLANATION OF REFERENCE NUMERALS

- 1: torch
- 1a: tungsten electrode
- 1b, 1b': nozzle
- 1c: air supply port for electrode push-out
- 1d: air supply port for electrode pull-in
- 1e: cooling water discharge port
- 1f: shielding gas (G2) supply port
- 1g: cooling water supply port
- 1h: center gas (G1) supply port
- 2: work
- 3: robot
- 4: attachment jig
- 5: controller
- 6: main power source
- 7: pilot power source
- 8, 9: gas cylinder
- 10: air compressor
- 11: optical sensor
- 12: electrode support member
- 13: electrode holding portion
- 13a: protrusion
- 14: pilot arc
- 15: main arc
- G: center gas
- G2: shielding gas

## Claims

1. A non-consumable electrode type arc welding apparatus comprising:
a torch comprising an electrode portion and a nozzle provided around an outer periphery of the electrode portion such that a gap is formed between the electrode portion and the nozzle;
a gas supply that supplies a shielding gas to the torch, the shielding gas flowing through the gap between the electrode portion and the nozzle;
a first powder source that applies a voltage between the electrode portion and the nozzle to generate a pilot arc;
a second power source that applies a voltage between the electrode and a work to generate a main arc; and
a controller that controls the first power source and the second power source,
wherein the electrode portion comprises an electrode and an electrode holding portion holding a base portion of the electrode,
the electrode holding portion comprises a protrusion protruding toward the nozzle from a side facing the nozzle, and
the torch comprises a moving mechanism configured to move the electrode portion in a longitudinal direction inside the torch such that the protrusion and the nozzle contact and separate from each other.

2. The non-consumable electrode type arc welding apparatus according to claim 1, wherein, when the moving mechanism causes the protrusion and the nozzle to contact each other, the shielding gas flows through the gap maintained by the protrusion between the electrode holding portion and the nozzle.

3. The non-consumable electrode type arc welding apparatus according to claim 1, wherein the pilot arc is generated between the protrusion and the nozzle by the first power source by separating the protrusion and the nozzle after causing the protrusion and the nozzle to contact each other.

4. The non-consumable electrode type arc welding apparatus according to claim 3, wherein the shielding gas moves the pilot arc to a tip portion of the electrode, and the second power source causes the pilot arc to make a transition to the main arc between the electrode and the work.

5. The non-consumable electrode type arc welding apparatus according to claim 1. wherein the moving mechanism is an air cylinder.

6. The non-consumable electrode type arc welding apparatus according to claim 1, wherein the electrode holding portion and the nozzle are made of a copper alloy.

7. The non-consumable electrode type arc welding apparatus according to claim 1, further comprising an articulated robot having a distal end to which the torch is attached, and a robot controller that controls the robot, wherein the robot controller serves as the controller and controls the first power source and the second powder source.

8. The non-consumable electrode type arc welding apparatus according to claim 1, wherein a tip portion of the electrode is exposed from a tip portion of the nozzle to carry out a TIG arc welding.

9. The non-consumable electrode type arc welding apparatus according to claim 1, wherein the nozzle covers the entire electrode to carry out a plasma arc welding.
